# EUROPÄISCHE PATENTSCHRIFT

(11) **EP 1 661 953 B1**
(45) Veröffentlichungstag und Bekanntmachung des Hinweises auf die Patenterteilung: **29.10.2008**
(21) Anmeldenummer: 05025000.0
(22) Anmeldetag: 16.11.2005
(51) Int. Cl.: C09D 5/03, C08L 23/00

(54) **Verwendung von polar modifizierten Polyolefinwachsen zur Verbesserung der Haftung von Dichtstoffen auf Pulverlacken**
Use of polar polyolefin waxes for improving the adhesion of sealants on powder coatings
Utilisation de cires à base de polyoléfines polaires améliorant l'adhérence des matériaux d'étanchéité sur des peintures en poudre

(30) Priorität: 25.11.2004 DE 102004056875
(43) Veröffentlichungstag der Anmeldung: 31.05.2006
(73) Patentinhaber: Clariant Produkte (Deutschland) GmbH, 65929 Frankfurt am Main (DE)
(72) Erfinder: Schmalzl, Manfred, Dl., 85757 Karlsfeld (DE); Nowicki, Hans-Dieter, 86368 Gersthofen (DE)

(56) Entgegenhaltungen:
- EP-A1- 0 035 392
- EP-A2- 0 462 680
- EP-A2- 1 318 433
- WO-A-01/85855
- WO-A-01/98386
- WO-A-03/087242

## Beschreibung

Verwendung von polar modifizierten Polyolefinwachsen zur Verbesserung der Haftung von Dichtstoffen auf Pulverlacken

Die Erfindung betrifft die Verwendung von polar modifizierten Polyolefinwachsen zur Verbesserung der Haftung von Dichtstoffen auf Pulverlacken.

Lösemittelfreie, pulverförmige Anstrichsysteme, so genannte Pulverlacke, gewinnen zunehmend an Bedeutung. Diese Pulverlacke werden in der Regel durch elektrostatische Applikation auf Substrate aufgebracht und bei höheren Temperaturen ausgehärtet.

Der Einsatz von Wachsen auf Basis Polyethylen, Polypropylen, Polytetrafluoroethylen, Bisstearoylamid und Montansäuren als Additive zur Verbesserung der Kratzfestigkeit, des Entgasungsverhaltens oder der Pigmentdispergierung für solche Systeme ist seit langem bekannt und gehört zum Stand der Technik.

Bei der Verwendung von pulverlackierten Teilen werden Übergänge zu anderen Objekten oder Bauteilen häufig mit Dichtstoffen auf Basis von Silicon oder Acrylat abgedichtet. Nachteil der bisher bekannten und verwendeten Wachse ist, dass sie die Haftung von Dichtstoffen auf der Pulverlackoberfläche herabsetzen oder sogar ganz verhindern.

Die Erfindung ist daher auf die Verwendung von Polyolefinwachsen gerichtet, die so modifiziert sind, dass sich die vorstehend genannten Nachteile vermeiden und die Haftung von Dichtstoffen verbessern lassen.

Die vorstehend genannte Aufgabe wird somit gelöst durch die Verwendung von polar modifizierten Polyolefinwachsen zur Verbesserung der Haftung von Dichtstoffen auf Pulverlacken.

Bevorzugt werden dabei die polar modifizierten Polyolefinwachse durch Pfropfung von Polyolefinwachsen mit polaren Pfropfcomonomeren hergestellt.

Bevorzugt handelt es sich bei den polaren Pfropfcomonomeren um alpha-, betaungesättigte Carbonsäuren und/oder deren Derivate und/oder Alkoxyvinylsilan.

Bevorzugt beträgt der Anteil des polaren Pfropfcomonomeren, bezogen auf gepfropftes Polyolefinwachs 0,1 bis 20 Gew.-%.

Bevorzugt handelt es sich bei dem Polyolefinwachs um Polyethylen, Polypropylen oder Ethylen-Propylen-Copolymere.

Bevorzugt betragen die Schmelzviskositäten der gepfropften Polyolefinwachse 10 bis 50.000 mPas, gemessen bei 170°C, und ihre Erweichungspunkte (Ring/Kugel) 75 bis 170°C.

Besonders bevorzugt betragen die Schmelzviskositäten der gepfropften Polyolefinwachse 40 bis 30.000 mPas, gemessen bei 170°C, und ihre Erweichungspunkte (Ring/Kugel) 80 bis 160°C betragen.

Bevorzugt werden die polar modifizierten Polyolefinwachse, bezogen auf das Gesamtgewicht der Pulverlacke, in Mengen von 0,1 bis 20,0 Gew.-% eingesetzt.

Besonders bevorzugt werden die polar modifizierten Polyolefinwachse, bezogen auf das Gesamtgewicht der Pulverlacke, in Mengen von 0,1 bis 10,0 Gew.-% eingesetzt.

Insbesondere werden die polar modifizierten Polyolefinwachse, bezogen auf das Gesamtgewicht der Pulverlacke, in Mengen von 0,3 bis 6,0 Gew.-% eingesetzt.

Bevorzugt werden die polar modifizierten Polyolefinwachse mit üblichen Additiven wie Vernetzungsmittel, Vernetzungsbeschleuniger, Pigmente, UV-Stabilisatoren und anderen Hilfsmitteln eingesetzt.

Die Erfindung betrifft die Verwendung von polar modifizierten Polyolefinwachsen in Pulverlacke, enthaltend thermoplastische oder duroplastische Kunstharze und, bezogen auf das Gesamtgewicht der Pulverlacke, 0,1 bis 20,0 Gew.-%, vorzugsweise 0,3 bis 6,0 Gew.-% eines oder mehrerer polar modifizierten Polyolefinwachse, wobei die polar modifizierten Polyolefinwachse durch Pfropfung von Polyolefinwachsen mit polaren Pfropfcomonomeren hergestellt werden, sowie gegebenenfalls übliche Additive wie Vernetzungsmittel, Vernetzungsbeschleuniger, Pigmente und UV-Stabilisatoren.

Die oben genannten einsetzbaren Polyolefinwachse sind erhältlich durch Verfahren wie sie in Ullmanns Encyclopädie der technischen Chemie, 5. Ausgabe, Vol. A28, Seite 107 und Seite 146 - 155, Verlag Chemie Weinheim (ISBN 3-527-20128-9), 1991, sowie in EP-A-0 321 852, EP-A-0 384 264, EP-A-0 416 566 und DE-A-196 48 895 beschrieben sind.

Die Pfropfung wird in der Art und Weise durchgeführt, wie sie zum Beispiel in der EP-A-0 941 257 oder in der JP-A-54/145785 beschrieben ist.

Als Ausgangsstoff für die Pfropfung sind Polyolefine mit Schmelzviskositäten von 10 bis 50000 mPas, gemessen bei 170°C, und Erweichungspunkten (Ring/Kugel) von 75 bis 170°C, vorzugsweise von 80 bis 160°C, geeignet.

Geeignete polare Pfropfcomonomere sind α,β-ungesättigte Carbonsäuren oder deren Derivate oder Alkoxyvinylsilane der allgemeinen Formel CH₂=CR¹-(COO)ₓ(CₙH₂ₙ)_{y}Si(R²)_{z}(OR³)_{3-z}, wobei R¹ Wasserstoff oder CH₃ und R² und R³ verzweigte oder unverzweigte Alkylreste mit 1 bis 6 C-Atomen bedeuten, n = 1 bis 6 ist, x und y = 0 oder 1 sind, wobei y = 1 ist, wenn x = 1 ist, und z = 0 bis 2 ist.

Besonders bevorzugt sind Vinyltrimethoxysilan oder Vinyltriethoxysilan.

Beispiele für α,β-ungesättigte Carbonsäuren oder deren Derivate sind Acrylsäure oder Methacrylsäure oder deren Ester oder Amide, Maleinsäure, Maleinsäureanhydrid, Mono- oder Diester der Maleinsäure, Amide der Maleinsäure. Bevorzugt sind Maleinsäure und ihre Derivate; besonders bevorzugt ist Maleinsäureanhydrid.

Der Anteil der polaren Pfropfcomonomeren bezogen auf Polyolefin beträgt 0,1 bis 20 Gew.-%. Die Pfropfung kann in einem oder in mehreren Schritten durchgeführt werden. Zur Pfropfung können ein oder mehrere Pfropfcomonomere eingesetzt werden.

Erfindungsgemäß lassen sich somit polar modifizierte Polyolefinwachse als Additiv zur Verbesserung der Haftung von Dichtstoffen in Pulverlacken einsetzen.

Der Gegenstand der vorliegenden Erfindung ist auf übliche Typen von Pulverlacken anwendbar, wie sie in Ullmanns Encyclopädie der technischen Chemie, 5. Ausgabe, Vol. A18, Seite 438 - 444, Verlag Chemie Weinheim, 1991, beschrieben sind.

### Beispiele:

Physikalische Eigenschaften der getesteten polaren Polyolefinwachse

| | Typ/Verfahren | % polare Komponente | Polare Komponente | Viskosität bei 170°C | Erweichungspunkt (Ring/Kugel) |
|---|---|---|---|---|---|
| Wachs 1¹⁾ | Polypropylenwachs nach Ziegler-Verfahren | 7 | Maleinsäureanhydrid | Ca. 800 mPas | Ca. 156°C |
| Wachs 2¹⁾ | Polypropylenwachs nach Metallocen-Verfahren | 7 | Maleinsäureanhydrid | Ca. 10 mPas | Ca 140°C |
| Wachs 3¹⁾ | Polyethylenwachs nach Metallocen-Verfahren | 7,5 | Maleinsäureanhydrid | Ca. 100 mPas | Ca. 120°C |
| Wachs 4²⁾ | Polyethylenwachs nach Metallocen-Verfahren | 10 | Trimethoxyvinylsilan | Ca. 60 mPas | Ca. 115°C |
| Wachs 5 (Vergleich) | Polyethylenwachs nach Ziegler-Verfahren | 0 | - | Ca. 200 mPas | Ca. 125°C |

| | | | | | |
|---|---|---|---|---|---|
| ¹⁾ Hergestellt entsprechend EP-A-0 941 257 ²⁾ Hergestellt entsprechend JP-A-54/145785 | | | | | |

Zur Prüfung der Eignung der erfindungsgemäß eingesetzten polaren Polyolefinwachse zur Verbesserung der Haftung von Dichtstoffen wurden diese in folgenden Pulverlacksystemen getestet:

### 1. Polyester-Epoxid-Lack

Eine Pulverlackzusammensetzung aus 39,5 Gew.-Teilen eines carboxyfunktionellen Polyesterharzes, 16,7 Gew.-Teilen eines Epoxidharzes, 3,0 Gew.-Teilen eines Verlaufsadditivs, 0,3 Gew.-Teilen eines Entgasungsmittels, 10,0 Gew.-Teilen eines Füllstoffs und 29,5 Gew.-Teilen Titandioxid wurden unter Zusatz von 1,0 Gew.-Teilen des zu prüfenden polaren Polyolefinwachses der Erfindung in einem Schnellmischer gemischt; die Mischung wurde anschließend bei ca. 100°C extrudiert, granuliert, vermahlen und gesiebt. Die erhaltenen Pulverlacke wurden elektrostatisch auf eine Metalloberfläche aufgebracht und 15 min bei 180°C eingebrannt.

### 2. Polyester-Lack

Analog zu der unter 1. beschriebenen Weise wurde aus 60,4 Gew.-Teilen eines carboxyfunktionellen Polyesterharzes, 4,5 Gew.-Teilen Triglycidylisocyanurat, 3,2 Gew.-Teilen eines Verlaufsadditivs, 0,5 Gew.-Teilen eines Entgasungsmittels, 10,0 Gew.-Teilen eines Füllstoffs und 20,4 Gew.-Teilen Titandioxid unter Zusatz von 1,0 Gew.-Teilen eines erfindungsgemäßen polaren Polyolefinwachses ein Pulverlack hergestellt und auf eine Metalloberfläche appliziert. Die Einbrennbedingungen sind 15min bei 180°C.

Auf die pulverlackierten Oberflächen wurde aus einer Kartusche handelsüblicher Silicon-Dichtstoff (z.B. Knauf Bau-Silikon, weiß, für innen und außen) gemäß Gebrauchsanleitung aufgetragen. Die Endfestigkeit des Dichtstoffes wird nach 6 bis 8 Tagen erreicht. Nach Erreichen der Eridfestigkeit wurde versucht, den aufgetragenen Dichtstoff manuell zu entfernen. Sowohl bei der Pulverlackbeschichtung ohne Wachsadditiv als auch mit dem Vergleich (Wachs 5) konnte der Dichtstoff problemlos, rückstandslos und ohne Kohäsionsbruch entfernt werden.

Von den Pulverlacken welche die erfindungsgemäßen polaren Polyolefinwachse nach den beispielen 1 bis 4 enthielten, konnte der Silkon-Dichtstoff nicht zerstörungsfrei entfernt werden. Somit wird die Haftung von Dichtstoffen auf Pulverlacken unter Verwendung von erfindungsgemäß polar modifizierten Polyolefinwachsen verbessert.

## Patentansprüche

1. Verwendung von polar modifizierten Polyolefinwachsen als Additiv in Pulverlacken zur Verbesserung der Haftung von Dichtstoffen auf Pulverlacken.

2. Verwendung nach Anspruch 1, **dadurch gekennzeichnet, dass** die polar modifizierten Polyolefinwachse durch Pfropfung von Polyolefinwachsen mit polaren Pfropfcomonomeren hergestellt werden.

3. Verwendung nach Anspruch 1 oder 2, **dadurch gekennzeichnet, dass** es sich bei den polaren Pfropfcomonomeren um alpha-, beta-ungesättigten Carbonsäuren und/oder deren Derivaten und/oder Alkoxyvinylsilan handelt.

4. Verwendung nach einem oder mehreren der Ansprüche 1 bis 3, **dadurch gekennzeichnet, dass** der Anteil des polaren Pfropfcomonomeren, bezogen auf gepfropftes Polyolefinwachs 0,1 bis 20 Gew.-% beträgt.

5. Verwendung nach einem oder mehreren der Ansprüche 1 bis 4, **dadurch gekennzeichnet, dass** es sich bei dem Polyolefinwachs um Polyethylen, Polypropylen oder Ethylen-Propylen-Copolymere handelt.

6. Verwendung nach einem oder mehreren der Ansprüche 1 bis 5, **dadurch gekennzeichnet, dass** die Schmelzviskositäten der gepfropften Polyolefinwachse 10 bis 50.000 mPa·s, gemessen bei 170°C, und ihre Erweichungspunkte (Ring/Kugel) 75 bis 170°C betragen.

7. Verwendung nach einem oder mehreren der Ansprüche 1 bis 6, **dadurch gekennzeichnet, dass** die Schmelzviskositäten der gepfropften Polyolefnwachse 40 bis 30.000 mPa·s, gemessen bei 170°C, und ihre Erweichungspunkte (Ring/Kugel) 80 bis 160°C betragen.

8. Verwendung nach einem oder mehreren der Ansprüche 1. bis 7, **dadurch gekennzeichnet, dass** die polar modifizierten Polyolefinwachse, bezogen auf das Gesamtgewicht der Pulverlacke, in Mengen von 0,1 bis 20,0 Gew.-% eingesetzt werden.

9. Verwendung nach einem oder mehreren der Ansprüche 1 bis 8, **dadurch gekennzeichnet, dass** die polar modifizierten Polyolefinwachse, bezogen auf das Gesamtgewicht der Pulverlacke, in Mengen von 0,1 bis 10,0 Gew.-% eingesetzt werden.

10. Verwendung nach einem oder mehreren der Ansprüche 1 bis 9, **dadurch gekennzeichnet, dass** die polar modifizierten Polyolefinwachse, bezogen auf das Gesamtgewicht der Pulverlacke, in Mengen von 0,3 bis 6,0 Gew.-% eingesetzt werden.

11. Verwendung nach einem oder mehreren der Ansprüche 1 bis 10, **dadurch gekennzeichnet, dass** die polar modifizierten Polyolefinwachse mit üblichen Additiven wie Vernetzungsmittel, Vernetzungsbeschleuniger, Pigmente, UV-Stabilisatoren und anderen Hilfsmitteln eingesetzt werden.

## Claims

1. The use of polar-modified polyolefin waxes as an additive in powder coating materials to improve the adhesion of sealants to powder coatings.

2. The use as claimed in claim 1, wherein the polar-modified polyolefin waxes are prepared by grafting polyolefin waxes with polar graft comonomers.

3. The use as claimed in claim 1 or 2, wherein the polar graft comonomers are alpha,beta-unsaturated carboxylic acids and/or their derivatives and/or alkoxyvinylsilane.

4. The use as claimed in one or more of claims 1 to 3, wherein the fraction of the polar graft comonomer, based on grafted polyolefin wax, is 0.1 to 20% by weight.

5. The use as claimed in one or more of claims 1 to 4, wherein the polyolefin wax is polyethylene, polypropylene or an ethylene-propylene copolymer.

6. The use as claimed in one or more of claims 1 to 5, wherein the melt viscosities of the grafted polyolefin waxes are 10 to 50 000 mPa·s, measured at 170°C, and their softening points (ring & ball) are 75 to 170°C..

7. The use as claimed in one or more of claims 1 to 6, wherein the melt viscosities of the grafted polyolefin waxes are 40 to 30 000 mPa·s, measured at 170°C, and their softening points (ring & ball) are 80 to 160°C.

8. The use as claimed in one or more of claims 1 to 7, wherein the polar-modified polyolefin waxes are used, based on the total weight of the powder coating materials, in amounts of 0.1 % to 20.0% by weight.

9. The use as claimed in one or more of claims 1 to 8, wherein the polar-modified polyolefin waxes are used, based on the total weight of the powder coating materials, in amounts of 0.1 % to 10.0% by weight.

10. The use as claimed in one or more of claims 1 to 9, wherein the polar-modified polyolefin waxes are used, based on the total weight of the powder coating materials, in amounts of 0.3% to 6.0% by weight.

11. The use as claimed in one or more of claims 1 to 10, wherein the polar-modified polyolefin waxes are used with customary additives such as crosslinking agents, crosslinking accelerators, pigments, UV stabilizers, and other auxiliaries.

## Revendications

1. Utilisation de cires de polyoléfine modifiées de manière polaire comme additif dans les laques en poudre pour améliorer l'adhérence de substances d'étanchéité sur les laques en poudre.

2. Utilisation selon la revendication 1, **caractérisée en ce que** les cires de polyoléfine modifiées de manière polaire sont préparées par greffage de cires de polyoléfine par des comonomères de greffage polaires.

3. Utilisation selon la revendication 1 ou 2, **caractérisée en ce qu'**il s'agit, pour les comonomères de greffage polaires, d'acides carboxyliques alpha-insaturés, bêta-insaturés et/ou de leurs dérivés et/ou d'alcoxyvinylsilane.

4. Utilisation selon l'une ou plusieurs des revendications 1 à 3, **caractérisée en ce que** la proportion de comonomères de greffage polaires par rapport à la cire de polyoléfine greffée, est de 0,1 à 20% en poids.

5. Utilisation selon l'une ou plusieurs des revendications 1 à 4, **caractérisée en ce qu'**il s'agit, pour la cire de polyoléfine, de polyéthylène, de polypropylène ou de copolymères d'éthylène-propylène.

6. Utilisation selon l'une ou plusieurs des revendications 1 à 5, **caractérisée en ce que** les viscosités de la masse fondue des cires de polyoléfine greffées sont de 10 à 50 000 mPa.s, mesurées à 170°C, et leurs points de ramollissement (anneau/bille) sont de 75 à 170°C.

7. Utilisation selon l'une ou plusieurs des revendications 1 à 6, **caractérisée en ce que** les viscosités de la masse fondue des cires de polyoléfine greffées sont de 40 à 30 000 mPa.s, mesurées à 170°C, et leurs points de ramollissement (anneau/bille) sont de 80 à 160°C.

8. Utilisation selon l'une ou plusieurs des revendications 1 à 7, **caractérisée en ce que** les cires de polyoléfine modifiées de manière polaire sont utilisées, par rapport au poids total des laques en poudre, en des quantités de 0,1 à 20,0% en poids.

9. Utilisation selon l'une ou plusieurs des revendications 1 à 8, **caractérisée en ce que** les cires de polyoléfine modifiées de manière polaire sont utilisées, par rapport au poids total des laques en poudre, en des quantités de 0,1 à 10,0% en poids.

10. Utilisation selon l'une ou plusieurs des revendications 1 à 9, **caractérisée en ce que** les cires de polyoléfine modifiées de manière polaire sont utilisées, par rapport au poids total des laques en poudre, en des quantités de 0,3 à 6,0% en poids.

11. Utilisation selon l'une ou plusieurs des revendications 1 à 10, **caractérisée en ce que** les cires de polyoléfine modifiées de manière polaire sont utilisées avec des additifs usuels tels que des réticulants, des accélérateurs de réticulation, des pigments, des stabilisateurs des UV et d'autres adjuvants.
